# EUROPÄISCHE PATENTANMELDUNG

(11) **EP 1 475 765 A2**
(43) Veröffentlichungstag der Anmeldung: **10.11.2004**
(21) Anmeldenummer: 04100845.9
(22) Anmeldetag: 03.03.2004
(51) Int. Cl.: G08G 1/16

(54) **Vorrichtung zur Bestimmung einer Durchfahrtsmöglichkeit für ein Fahrzeug**

(30) Priorität: 08.05.2003 DE 10320724
(71) Anmelder: ROBERT BOSCH GMBH, 70442 Stuttgart (DE)
(72) Erfinder: Ewerhart, Frank, 74189 Weinsberg (DE); Guenther, Clemens, 76275 Ettlingen (DE); Wittig, Thomas, 71139 Ehningen (DE); Engeln, Arnd, 72072 Tuebingen (DE)

(57) **Zusammenfassung**

Es wird eine Vorrichtung zur Bestimmung einer Durchfahrtsmöglichkeit für ein Fahrzeug an Hindernissen vorgeschlagen, die dazu dient, abzuschätzen, ob ein Fahrzeug bezüglich seiner Fahrzeughöhe und/oder seiner Fahrzeugbreite zwischen Hindernissen hindurchfahren kann.

## Beschreibung

### Stand der Technik

Die Erfindung geht aus von einer Vorrichtung zur Bestimmung einer Durchfahrtsmöglichkeit für ein Fahrzeug nach der Gattung des Hauptanspruchs. Es ist bereits bekannt, in Kraftfahrzeuge eine Vielzahl von Sensoren zur Umgebungswarnung einzubringen. Für die Messung der Entfernung zwischen einem Fahrzeug und Hindernissen bei einem Einparkvorgang sind Ultraschallsensoren bekannt. Für ein abstandsgeregeltes Folgefahren werden Radarsensoren oder Lasersensoren eingesetzt, in Abhängigkeit von deren Messdaten die Fahrzeuggeschwindigkeit an die Geschwindigkeit eines vorausfahrenden Fahrzeugs angepasst wird. Ferner sind Kamerasysteme bekannt, die Objekte in der Fahrzeugumgebung detektieren und auswerten. Diese Sensoren zur Umfeldüberwachung dienen im Allgemeinen dazu, Hindernisse zu detektieren und dem Fahrer den Abstand zwischen seinem Fahrzeug und den Hindernissen bzw. die Geschwindigkeit gegenüber den Hindernissen anzuzeigen.

Ferner ist es aus der DE 199 28 679 A1 bekannt, in einem Fahrzeug Grenzwerte insbesondere für die Fahrzeugbreite und die Fahrzeughöhe abzulegen. Die Position des Fahrzeugs wird erfasst. Nähert sich das Fahrzeug relevanten Bauwerken, so werden die Fahrzeugdaten mit den gespeicherten Daten des relevanten Bauwerks verglichen. Kann das Fahrzeug das Bauwerk nicht passieren, da es zu hoch oder zu breit ist, wird eine Warnung an den Fahrer ausgegeben.

Vorteile der Erfindung

Die erfindungsgemäße Vorrichtung zur Bestimmung einer Durchfahrtsmöglichkeit für ein Fahrzeug an Hindernissen hat demgegenüber den Vorteil, dass vor einem Hindernis die Durchfahrtsbreite und/oder die Durchfahrtshöhe an dem Hindernis durch eine Sensoreinheit gemessen und mit den Fahrzeugdaten verglichen wird. Hierdurch ist es möglich, auch auf aktuelle Änderungen im Straßenverlauf zu reagieren, so dass die Warnung bei einer nicht ausreichenden Durchfahrtshöhe und/oder Durchfahrtsbreite auch an Stellen erfolgen kann, die sich dynamisch verändern und für die kein Messwert in einer Datenbank abgelegt ist. Das ist insbesondere dann der Fall, wenn die Durchfahrtsbreite durch parkende Fahrzeuge begrenzt wird. Durch die dynamische Messung kann auf eine Positionsbestimmung verzichtet werden. Darüber hinaus ist es möglich, einem Fahrer eine Information darüber zu geben, ob er ein Hindernis passieren kann. Eine derartige Auswertung geht über die bloße Bestimmung des Abstands zwischen dem Fahrzeug und Hindernissen hinaus. Denn hierdurch wird es einem Fahrer eines Kraftfahrzeugs ermöglicht, eine Durchfahrtsmöglichkeit bezüglich der zur Verfügung stehenden Straßenbreite und/oder der zur Verfügung stehenden Höhe gegenüber der Straße genauer abzuschätzen, als es ihm sein Augenmaß ermöglicht. Ein Fahrer kann somit sicher bereits vor einer Engstelle entscheiden, ob der Platz zwischen den Hindernissen ausreicht, um zwischen den Hindernissen durchzufahren und seine Fahrt fortzusetzen. Mögliche kritische Situationen, die dadurch entstehen, dass ein Fahrer zunächst zwischen enge Hindernisse hinein fährt und anschließend zurücksetzen muss, da er die Hindernisse tatsächlich nicht passieren kann, können vermieden werden. Insbesondere einem unsicheren Fahrer wird dabei die Entscheidung erleichtert, ob er weiterfahren, anhalten oder zurücksetzen muss.

Durch die in den Unteransprüchen aufgeführten Maßnahmen sind vorteilhafte Weiterbildungen und Verbesserungen der im Hauptanspruch angegebenen Vorrichtung zur Bestimmung einer Durchfahrtsmöglichkeit für Fahrzeuge an Hindernissen möglich. Besonders vorteilhaft ist, in einer Anzeigeeinheit einem Fahrer die Durchfahrtshöhe und/oder die Durchfahrtsbreite anzuzeigen. Hierdurch ist es dem Fahrer möglich, auch numerisch die ermittelten Messwerte mit den Fahrzeugdaten zu vergleichen, um die Einschätzung, die eine Auswerteeinheit vornimmt, zu überprüfen.

Ferner ist vorteilhaft, Sensoren der Sensoreinheit sowohl an der Fahrzeugvorderseite als auch an der Fahrzeugrückseite anzuordnen, so dass eine Abschätzung der Durchfahrtsbreite und/oder Durchfahrtshöhe sowohl bei einer Fahrt voraus, als auch bei einem Zurücksetzen des Fahrzeugs überwacht werden kann.

Es ist ferner vorteilhaft, dass die Auswerteeinheit eine positive Bestätigung ausgibt, wenn eine Durchfahrtsmöglichkeit an den Hindernissen vorbei besteht. Hierdurch kann sich ein Fahrer sicher sein, dass der ihm zur Verfügung stehende Raum tatsächlich für eine Durchfahrt ausreicht.

Weiterhin ist es vorteilhaft, eine Lenkrichtungskorrektur an den Fahrer auszugeben, so dass er an den Hindernissen vorbeigeführt wird. Hierdurch kann ein Fahrer gegebenenfalls sogar engere Stellen passieren, die er ohne eine solche Unterstützung, z.B. durch entsprechende Anzeigen, nicht hätte passieren können.

Es ist ferner vorteilhaft, einen Sicherheitsabstand vorzusehen, der bei dem Vergleich zwischen der zur Verfügung stehenden Durchfahrtsbreite und/oder Durchfahrtshöhe mit der Fahrzeugbreite und/oder der Fahrzeughöhe berücksichtigt wird, indem der Sicherheitsabstand vorzugsweise der Fahrzeugbreite und/oder der Fahrzeughöhe jeweils hinzuaddiert wird. Indem dieser Sicherheitsabstand wählbar ist, kann ein Fahrer die Vorrichtung zur Bestimmung einer Durchfahrtsmöglichkeit an seine Fahrfähigkeiten anpassen. Ein sicherer Fahrer wird mit einem geringeren Sicherheitsabstand auskommen, während ein unsichererer Fahrer sich gegebenenfalls einen größeren Sicherheitsabstand wünscht.

Ferner ist es vorteilhaft, dass durch die Sensoreinheit sowohl ruhende, als auch sich bewegende Hindernisse erfasst werden. Hierdurch können auch entgegenkommende Fahrzeuge, die z.B. mit einer dem entgegenkommenden Fahrzeug seitlich gegenüberliegenden Hauswand eine Durchfahrtsbreite zwischen der Hauswand und dem entgegenkommenden Fahrzeug definieren, ebenfalls erfasst und für die Bestimmung einer Durchfahrtsmöglichkeit ausgewertet werden. Damit kann ein Fahrer im laufenden Verkehr, insbesondere auch an engen Stellen, entscheiden, ob er bei entsprechendem Gegenverkehr weiterfahren kann, anhalten, den Gegenverkehr abwarten oder gegebenenfalls zurücksetzen muss.

### Zeichnung

Ausführungsbeispiele der Erfindung sind in der Zeichnung dargestellt und in der nachfolgenden Beschreibung näher erläutert. Es zeigen
Figur 1 eine schematische Ansicht einer erfindungsgemäßen Vorrichtung zur Bestimmung einer Durchfahrtsmöglichkeit zur Anbringung in einem Kraftfahrzeug,
Figur 2 eine Aufsicht auf ein Kraftfahrzeug mit einer erfmdungsgemäßen Vorrichtung zur Bestimmung einer Durchfahrtsmöglichkeit vor einer engen Stelle einer Straße in Aufsicht,
Figur 3 eine Seitenansicht eines Kraftfahrzeugs mit einer erfindungsgemäßen Vorrichtung zur Bestimmung einer Durchfahrtsmöglichkeit gegenüber einem von oben in Richtung der Fahrbahn herabragendes Hindernis,
Figur 4 eine Engstelle in Aufsicht, an der sich zwei Fahrzeuge begegnen.

### Beschreibung des Ausführungsbeispiels

Die erfindungsgemäße Vorrichtung zur Bestimmung einer Durchfahrtsmöglichkeit an Hindernissen ist für beliebige Fahrzeuge verwendbar. Im Folgenden wird eine erfindungsgemäße Vorrichtung am Beispiel einer Verwendung in einem Kraftfahrzeug erläutert.

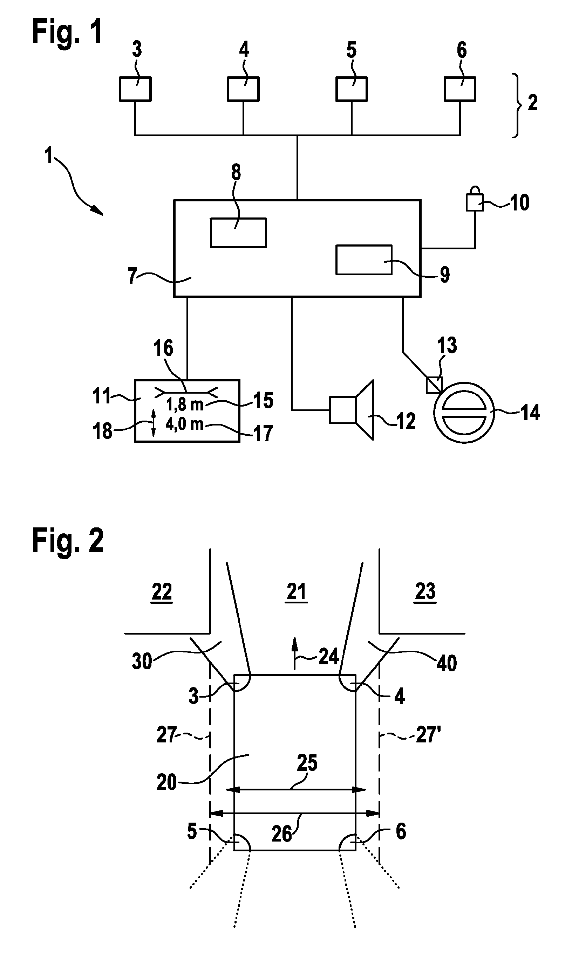

In der Figur 1 ist eine erfindungsgemäße Vorrichtung 1 zur Bestimmung einer Durchfahrtsmöglichkeit dargestellt, die in einem Kraftfahrzeug eingebaut ist. Die Vorrichtung 1 zur Bestimmung einer Durchfahrtsmöglichkeit weist eine Sensoreinheit 2 auf, die einzelne, an verschiedenen Stellen des Fahrzeugs angeordnete Sensoren 3, 4, 5, 6 aufweist. Bei dem hier gezeigten Ausführungsbeispiel sind vier Sensoren vorgesehen. Die Sensoreinheit 2 kann jedoch auch mehr oder weniger Sensoren umfassen. Die Sensoren 3, 4, 5, 6 sind mit einer Auswerteeinheit 7 verbunden. Die Auswerteeinheit 7 weist eine Recheneinheit 8 und einen Speicher 9 auf. Die Recheneinheit 8 dient zur Auswertung der von den Sensoren 3, 4, 5, 6 übermittelten Messdaten. In dem Speicher 9 sind Fahrzeugdaten, insbesondere Daten über die Fahrzeughöhe und/oder die Fahrzeugbreite des Fahrzeugs abgelegt. Die Auswerteeinheit 7 ist ferner mit einer Bedieneinheit 10 verbunden. An die Auswerteeinheit 7 ist eine Anzeigeeinheit 11 zur optischen Ausgabe von Warnhinweisen angeschlossen. Ferner ist ein Lautsprecher 12 an die Auswerteeinheit 7 zur akustischen Ausgabe von Warnhinweisen angeschlossen. Darüber hinaus ist eine motorische Einheit 13 an die Auswerteeinheit 7 angeschlossen, die der haptischen Rückwirkung dient. Die motorische Einheit 13 kann vorzugsweise auf ein Lenkrad 14 des Fahrzeugs wirken, so dass ein Fahrer des Fahrzeugs ein Rütteln in dem Lenkrad 14 spürt, wenn die motorische Einheit 13 von der Auswerteeinheit 7 aktiviert wird.

Die Sensoren 3, 4, 5, 6 sind in einer ersten Ausführungsform als Ultraschallsensoren ausgeführt. Die Ultraschallsensoren messen die Laufzeit eines Schallsignals, das sie aussenden und das von einem Hindernis reflektiert wird. Ferner ist es auch möglich, die Sensoren 3, 4, 5, 6 als Radarsensoren oder als Videosensoren auszuführen. Es ist auch möglich, je nach Montageort verschiedene Sensoren mit unterschiedlichen Messtechniken vorzusehen. Die von den Sensoren 3, 4, 5, 6 erfassten Daten werden von der Recheneinheit 8 verarbeitet und mit den in dem Speicher 9 abgelegten Fahrzeugdaten verglichen. Überschreitet entweder die Fahrzeugbreite oder die Fahrzeughöhe die zur Verfügung stehende Durchfahrtsbreite bzw. die zur Verfügung stehende Durchfahrtshöhe, so besteht keine Durchfahrtsmöglichkeit. In diesem Fall wird von der Recheneinheit 8 eine Warnausgabe durch die Anzeigeeinheit 11, durch den Lautsprecher 12 und/oder durch die motorische Einheit 13 ausgegeben.

In einer bevorzugten Ausführungsform werden die tatsächlich ermittelte Durchfahrtsbreite und/oder Durchfahrtshöhe in der Anzeigeeinheit 11 angezeigt. In dem hier vorliegenden Ausführungsbeispiel ist der angezeigten Durchfahrtsbreite 15 ein entsprechendes Symbol 16 und der angezeigten Durchfahrtshöhe 17 ein entsprechendes Symbol 18 zugeordnet. In dem hier vorliegenden Ausführungsbeispiel ist die Durchfahrtshöhe und die Durchfahrtsbreite jeweils numerisch ausgegeben, nämlich eine Durchfahrtsbreite von "1,8 m" und eine Durchfahrtshöhe von "4,0 m". Es ist jedoch auch möglich, anstelle einer numerischen Ausgabe lediglich einen Farbcode oder eine Balkenanzeige vorzusehen, die dem Fahrer ein relatives Verhältnis zwischen den Fahrzeugmaßen und der Durchfahrtsbreite bzw. der Durchfahrtshöhe anzeigt. Falls keine Durchfahrtsmöglichkeit besteht, wird zur Warnung über den Lautsprecher 12 ein entsprechender Warnton ausgegeben. Die motorische Einheit 13 sorgt dafür, dass gegebenenfalls das Lenkrad 14 in Schwingungen versetzt wird, die ein Fahrer erfühlen kann.

Stellt die Recheneinheit 8 dagegen fest, dass die Fahrzeugbreite und die Fahrzeughöhe eine Durchfahrt ermöglichen, so wird ein entsprechender optischer Hinweis in der Anzeigeeinheit 11 ausgegeben bzw. ein entsprechender Bestätigungston über den Lautsprecher 12 abgegeben. Der Fahrer kann nun beruhigt auf die vor ihm liegenden Hindernisse zufahren. In einer bevorzugten Ausführungsform kann auch der Abstand des Fahrzeugs zu den Hindernissen während der Vorbeifahrt überwacht werden. Hierbei können an den Fahrer Hinweise zu einer Lenkwinkelkorrektur ausgegeben werden, so dass er geeignete Lenkmaßnahmen ergreifen kann, um eine Kollision mit den Hindernissen während der Vorbeifahrt zu vermeiden.

Bei dem angegebenen Ausführungsbeispiel wird sowohl die Fahrzeughöhe, als auch die Fahrzeugbreite überwacht. Es ist jedoch auch möglich, nur die Fahrzeughöhe oder nur die Fahrzeugbreite durch die Sensoreinheit 2 zu überwachen und entsprechende Warnungen auszugeben.

In einer ersten Ausführungsform ist die Sensoreinheit 2 stets derart aktiv, dass vor dem Fahrzeug liegende Hindernisse automatisch bezüglich ihrer Breite und/oder Höhe vermessen werden. In einer weiteren Ausführungsform kann eine Messung auch über die Bedieneinheit 10 jeweils vor einem Hindernis von dem Fahrer aktiviert werden.

In einer bevorzugten Ausführungsform kann über die Bedieneinheit 10 auch ein Sicherheitsabstand festgelegt werden, der bei dem Vergleich zwischen der Durchfahrtsbreite bzw. der Durchfahrtshöhe und den Fahrzeugdaten hinzuaddiert wird. Dieser Sicherheitsabstand wird ebenfalls in dem Speicher 9 abgelegt.

In der Figur 2 ist ein Kraftfahrzeug 20 in Aufsicht dargestellt. Das Kraftfahrzeug 20 befindet sich vor einer Durchfahrt 21, die von einem ersten Haus und einem zweiten Haus 23 gebildet wird. Das Kraftfahrzeug 20 ist mit einer erfindungsgemäßen Vorrichtung zur Bestimmung einer Durchfahrtsmöglichkeit ausgestattet. In der Figur 2 sind lediglich die Sensoren 3, 4, 5, 6 an dem Kraftfahrzeug 20 dargestellt. Die ersten Sensoren 3, 4 sind an der Fahrzeugvorderseite angeordnet, während zweite Sensoren 5, 6 an der Fahrzeugrückseite angeordnet sind. Da das Fahrzeug in Pfeilrichtung 24 auf die Durchfahrt 21 zufährt, sind lediglich die vorderen Sensoren 3, 4 aktiviert. Ein erster Strahlenkegel 30 des an der linken Fahrzeugseite angeordneten Sensors 3 ist auf das erste Haus 22 gerichtet. Ein zweiter Strahlenkegel 40 des Sensors 4, der an der rechten Fahrzeugseite angeordnet ist, ist auf das zweite Haus 23 gerichtet. Die beiden Häuser 22, 23 werden von den Sensoren 3, 4 erfasst und die Auswerteeinheit 7 bestimmt aus dem ihr bekannten Abstand der beiden Sensoren 3, 4 und den Messdaten, also der Abstand zwischen den Sensoren und den Häusern 22, 23, die Durchfahrtsbreite der Durchfahrt 21. Die gemessene Durchfahrtsbreite wird mit der Breite 25 des Kraftfahrzeugs 20 verglichen, die in der Figur 2 skizziert ist. Bei diesem Vergleich werden auch über die Fahrzeugseiten hinausragende Teile, wie z.B. die Fahrzeugaußenspiegel, mit berücksichtigt. In einer bevorzugten Ausführungsform wird zudem ein Sicherheitsabstand berücksichtigt, so dass sich eine resultierende Fahrzeugbreite 26 ergibt. Diese ist zwischen den gestrichelten Linien 27,27' in der Figur 2 an dem Kraftfahrzeug 20 eingezeichnet, die den Sicherheitsabstand verdeutlichen. Die resultierende Fahrzeugbreite 26 wird nun mit der ermittelten Durchfahrtsbreite der Durchfahrt 21 verglichen. Im vorliegenden Fall ist die Fahrzeugbreite einschließlich des Sicherheitsabstandes zu gering, so dass einem Fahrer von einer Benutzung der Durchfahrt 21 abgeraten wird. Bei einem geringer eingestellten Sicherheitsabstand 27, 27' könnte jedoch die Durchfahrt 21 für das Kraftfahrzeug 20 ausreichend sein.

Wird dem Fahrer ein Durchqueren der Durchfahrt empfohlen, können ihm in einem bevorzugten Ausführungsbeispiel Hinweise bezüglich einer Lenkwinkelkorrektur gegeben werden. In einer ersten Ausführungsform können in der Anzeigeeinheit 11 Richtungspfeile angegeben werden, die den Fahrer darauf hinweisen, eine Lenkwinkelkorrektur in die jeweils angezeigte Richtung, also nach links oder nach rechts, vorzunehmen, wenn sich das Kraftfahrzeug 20 auf die Durchfahrt 21 zu bewegt oder die Durchfahrt 21 durchquert. In einer bevorzugten Ausführungsform sind hierbei in der Zeichnung nicht dargestellte Sensoren an der linken und rechten Seite des Fahrzeugs angeordnet. Eine Aktivierung der an den Seitenwänden angeordneten Sensoren erfolgt automatisch durch die Auswerteeinheit 7, wenn sich das Fahrzeug in der Durchfahrt 21 befindet. Durch eine Abstandsmessung zu den Wänden und einer damit verbundene Warnung eines Fahrers vor einer Kollision mit den Wänden der Häuser 22, 23 kann die Fahrt des Fahrzeugs durch die Durchfahrt 21 hindurch sicherer gestaltet werden. Insbesondere wird der Fahrer dabei unterstützt, den Abstand zu den Seitenwänden der Durchfahrt zu überwachen. In einer bevorzugten Ausführungsform ist es auch möglich, dass eine Lenkwinkelkorrektur während der Fahrt durch die Durchfahrt 21 von der Auswerteeinheit 7 automatisch vorgenommen wird, indem eine in der Zeichnung nicht dargestellte, bevorzugt von der Auswerteeinheit 7 angesteuerte motorische Antriebseinheit die Lenkung betätigt. Hierdurch wird der Fahrer weiter entlastet.

Die Strahlenkegel 30, 40 sind bevorzugt so ausgeführt, dass sie nicht nur lediglich die Kanten der Häuser 22, 23 erfassen, sondern in die Durchfahrt 21 hineinschauen, so dass z.B. sich verjüngende Durchfahrten bezüglich ihrer minimalen Breite erfasst werden können.

Die Strahlenkegel der an der Rückseite des Fahrzeugs angeordneten Sensoren 5, 6 sind lediglich gepunktet darstellt, da die Sensoren 5, 6, während der Fahrt in Pfeilrichtung 24 nach vorne nicht benötigt werden und daher deaktiviert sind.

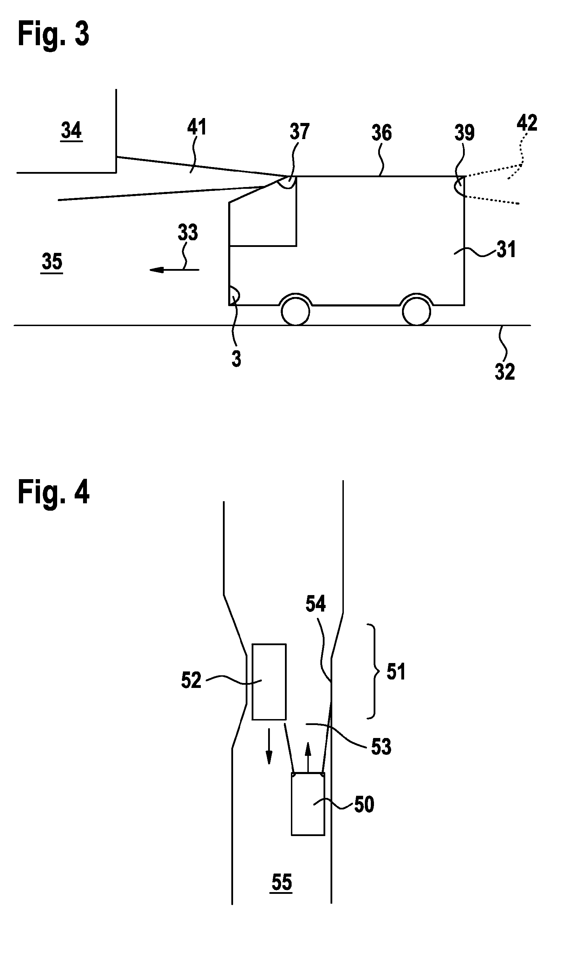

In der Figur 3 ist eine Seitenansicht eines Fahrzeugs 31 dargestellt, das sich auf einer Fahrbahn 32 auf eine Straßenunterführung 35 zu bewegt. Die Straßenunterführung 35 wird von einem Träger 34 in der Höhe begrenzt. An dem Dach 36 des Fahrzeugs 31 sind Sensoren 38, 39 angeordnet, die von der Fahrzeugvorderseite und von der Fahrzeugrückseite Messsignale ausstrahlen können. Ein Stahlenkegel 41 des an der Vorderseite des Fahrzeugs 31 angeordneten Sensors 37 trifft den Träger 34 der Straßenunterführung 35. Entsprechend der Abschätzung der Durchfahrtsbreite der Durchfahrt 21 gemäß der Figur 2 wird nun mittels der Auswerteeinheit 7 durch Auswertung der von dem Sensor 37 empfangenen Signale und der der Auswerteeinheit 7 bekannten Höhe des Sensors 37 über der Fahrbahn 32 eine Höhe der Straßenunterführung 35 abgeschätzt. Da diese Höhe auch von einem Verlauf der Fahrbahn 32 abhängig sein kann, wird in einem bevorzugten Ausführungsbeispiel mit einem an der Fahrzeugvorderseite angeordneten Sensor ein Verlauf der Fahrbahn 32 überwacht, um gegebenenfalls eine Höhendifferenz zwischen einer ansteigenden Fahrbahn 32 und der Position des Trägers 34 bestimmen zu können. Bei der vorliegenden Messung, bei der sich das Fahrzeug 31 in Pfeilrichtung 33 auf die Straßenunterführung 35 zu bewegt, wird der an der Fahrzeugrückseite angeordnete Sensor 39 nicht benötigt und ist daher inaktiv, was durch einen gestrichelt eingezeichneten Strahlenkegel 42 verdeutlicht wird. Der Sensor 39 dient einer Orientierung bei einem Zurücksetzen des Fahrzeugs 31.

In der Figur 4 ist in Aufsicht ein erstes Fahrzeug 50 dargestellt, das auf einer Straße 55 auf eine Engstelle 51 zufährt. In der Engstelle 51 befindet sich gerade ein zweites Fahrzeug 52, das dem ersten Fahrzeug 50 entgegen kommt. Ein Messbereich 53 der Sensoren des ersten Fahrzeugs 50 erfasst das entgegenkommende, sich bewegende zweite Fahrzeug 52 und eine seitliche Begrenzung 54 der Engstelle 51 auf der Straßenseite des ersten Fahrzeugs 50. Die Durchfahrtsbreite an der Engstelle 51 zwischen dem zweiten Fahrzeug 52 und der seitlichen Begrenzung 54 wird von der Auswerteeinheit 7 in dem ersten Fahrzeug 50 ermittelt. In Abhängigkeit davon wird es einem Fahrer angezeigt, ob er in die Engstelle 51 hineinfahren kann oder ob er vor der Engstelle 51 bremsen und abwarten sollte, bis das zweite Fahrzeug 52 die Engstelle 51 verlassen hat. Sowohl ein unnötiges Bremsen vor der Engstelle 51, als auch eine mögliche gefährliche Situationen innerhalb der Engstelle 51 werden somit vermieden.

## Patentansprüche

1. Vorrichtung zur Bestimmung einer Durchfahrtsmöglichkeit für ein Fahrzeug an Hindernissen, insbesondere für Kraftfahrzeuge, mit einer Sensoreinheit (2) zur Messung einer Durchfahrtsbreite zwischen Hindernissen (22, 23, 51) und/oder einer Durchfahrtshöhe unter Hindernissen (34) und mit einer Auswerteeinheit (7), wobei von der Auswerteeinheit (7) die ermittelte Durchfahrtsbreite und/oder die ermittelte Durchfahrtshöhe mit einer Fahrzeugbreite und/oder einer Fahrzeughöhe derart verglichen wird, dass eine Warnung für den Fall ausgegeben wird, dass die ermittelte Durchfahrtshöhe und/oder die ermittelte Durchfahrtsbreite eine Durchfahrtsmöglichkeit des Fahrzeugs an den Hindernissen (22, 23, 34, 51) nicht zulassen.

2. Vorrichtung nach Anspruch 1, **dadurch gekennzeichnet, dass** die Auswerteeinheit (7) eine Anzeigeeinheit (11) umfasst und dass in der Anzeigeeinheit (11) die ermittelte Durchfahrtsbreite (15) und/oder die ermittelte Durchfahrtshöhe (17) angezeigt ist.

3. Vorrichtung nach einem der vorherigen Ansprüche, **dadurch gekennzeichnet, dass** Sensoren (3, 4, 5, 6) der Sensoreinheit (2) an einer Fahrzeugvorderseite und an einer Fahrzeugrückseite angeordnet sind.

4. Vorrichtung nach einem der vorherigen Ansprüche, **dadurch gekennzeichnet, dass** die Auswerteeinheit (7) eine Ausgabe zur Bestätigung einer Durchfahrtsmöglichkeit veranlasst, wenn eine Durchfahrtsmöglichkeit an den Hindernissen besteht.

5. Vorrichtung nach einem der vorherigen Ansprüche, **dadurch gekennzeichnet, dass** durch die Sensoreinheit (2) ruhende (22, 23) und sich bewegende (53) Hindernisse erfassbar sind.

6. Vorrichtung nach einem der vorherigen Ansprüche, **dadurch gekennzeichnet, dass** eine Lenkwinkelkorrektur zur Durchfahrt an den Hindernissen ausgegeben wird oder automatisch durchgeführt wird.

7. Vorrichtung nach einem der vorherigen Ansprüche, **dadurch gekennzeichnet, dass** bei der Bestimmung der Durchfahrmöglichkeit ein wählbarer Sicherheitsabstand (27, 27') zwischen dem Fahrzeug (20, 31, 50) und den Hindernissen (22, 23, 34, 51) berücksichtigt wird.

8. Vorrichtung nach einem der vorherigen Ansprüche, **dadurch gekennzeichnet, dass** die Vorrichtung zur Bestimmung einer Durchfahrtsmöglichkeit vor dem Hindernis automatisch aktiviert wird.
